# DEMANDE DE BREVET EUROPEEN

(11) **EP 1 168 262 A1**
(43) Date de publication de la demande: **02.01.2002**
(21) Numéro de dépôt: 01401750.3
(22) Date de dépôt: 29.06.2001
(51) Int. Cl.: G07F 17/32, G07F 17/30

(54) **Dispositif et procédé de communication entre un système de reproduction d'informations audiovisuelles et une machine électronique de divertissement**

(30) Priorité: 29.06.2000 FR 0008397; 18.09.2000 FR 0011978
(71) Demandeur: TOUCHTUNES MUSIC CORPORATION, Las Vegas, NV 89104 (US)
(72) Inventeur: Nathan, Guy, Nun's Island, Quebec H3E 1H7 (CA); Mastronardi, Tony, Pierrefonds, Quebec H8Y 3L2 (CA); Choquet, Alain, Montreal, Quebec H8Y 3A2 (CA)
(74) Mandataire: Debay, Yves

(57) **Abrégé**

La présente invention concerne un dispositif de communication entre un système (1) de reproduction d'informations audiovisuelles et au moins une machine (2) électronique de divertissement, chaque machine électronique de divertissement comprenant des moyens de visualisation (210), des moyens d'interaction (211) avec l'utilisateur et des moyens (220) de paiement, caractérisé en ce que chaque machine (2) électronique de divertissement est connectée au système (1) de reproduction par l'intermédiaire d'une interface (21) réseau et d'un réseau (3) local associé et comprend des moyens (20, 21, 22) spécifiques de gestion des moyens de paiement, des moyens de visualisation et des moyens d'interaction, pour permettre sur la machine (2) électronique de divertissement, la sélection et le paiement d'au moins une sélection mémorisée sur le système (1) de reproduction, en vue de sa reproduction sur le système de reproduction, les moyens (22) spécifiques de gestion des moyens de paiement, et les moyens (21) spécifiques de gestion des moyens de visualisation et des moyens d'interaction moyens étant déclenchés par des moyens d'activation de la machine (2) électronique de divertissement..

## Description

La présente invention concerne un dispositif et procédé de communication entre un système de reproduction d'informations audiovisuelles et au moins une machine électronique de divertissement.

Il est connu dans l'art antérieur, notamment par les brevets européens EP 786121, et EP 786122 déposés par le demandeur, un système de reproduction d'informations audiovisuelles. Ce système comprend essentiellement des moyens de sélection et des moyens de reproduction permettant à un utilisateur de choisir une sélection musicale qui sera reproduite par le système.

De même, il est connu des machines électroniques de divertissement réalisées autour d'un système à microprocesseur. Ces machines ne possèdent pas d'interface de connexion et ne peuvent être utilisées en tant que terminal de système de reproduction et le juke-box ne peut servir à la collecte d'informations provenant des machines.

La présente invention a donc pour objet de pallier les inconvénients de l'art antérieur en proposant un dispositif de communication permettant l'utilisation des machines de divertissement en tant que terminal pour système de reproduction.

Cet objectif est atteint, selon la revendication 1, par un dispositif de communication entre un système de reproduction d'informations audiovisuelles et au moins une machine électronique de divertissement.

Des développements supplémentaires de l'invention sont décrits dans les revendications 2 à 6.

Un autre but est de proposer un procédé de communication permettant l'utilisation des machines de divertissement en tant que terminal pour système de reproduction.

Ce deuxième but est atteint, selon la revendication 7, par un procédé de communication entre un système de reproduction d'informations audiovisuelles et au moins une machine électronique de divertissement.

Des développements supplémentaires de l'invention sont décrits dans les revendications 8 à 11.

L'invention, avec ses caractéristiques et avantages, ressortira plus clairement à la lecture de la description faite en référence aux dessins annexés dans lesquels :
- la figure 1 représente un schéma du dispositif selon l'invention,
- la figure 2 représente un logigramme du procédé selon l'invention.

Comme expliqué précédemment, la présente invention concerne un dispositif de communication entre un système de reproduction d'informations audiovisuelles appelé par la suite juke-box dans un but de simplification, et au moins une machine électronique de divertissement.

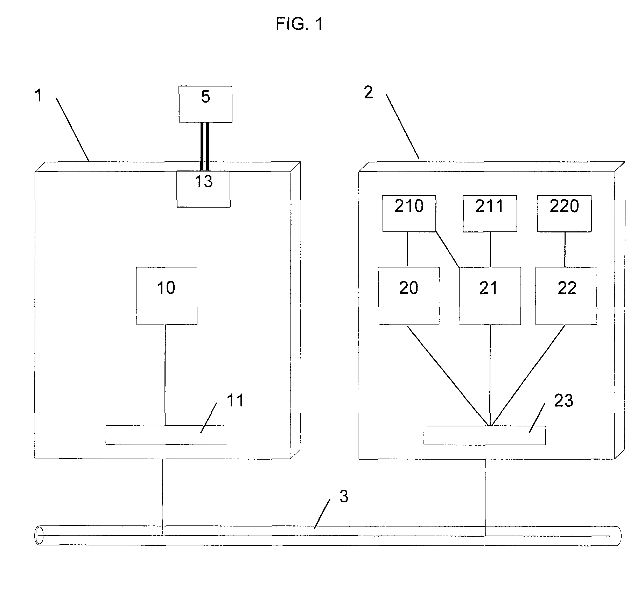

L'invention, va à présent être décrite en référence à la figure 1. Un exemple de juke-box (1) est décrit dans les brevets européens EP 786212 et EP 786122 déposés par la requérante. Un tel juke-box (1) comprend essentiellement, des moyens de paiement, des moyens de visualisation associés à des moyens d'interaction avec l'utilisateur, des moyens de reproduction sonore et des moyens de mémorisation de masse pour stocker une pluralité de sélections musicales. Le juke-box (1) peut comprendre également un modem (13) ou des moyens de communication équivalents avec un serveur (5) distant pour, par exemple, mettre à jour la bibliothèque de sélections musicales.

Afin de préciser le contexte de l'invention, il doit être compris que les machines électroniques (2) de divertissement sont, par exemple, des jeux électroniques ou des stations de consultation d'Internet. Ainsi, les machines (2) électroniques de divertissement n'assurent pas à l'origine de fonctionnalités telles que celles d'un juke-box ou d'un terminal de juke-box.

Au minimum, chaque machine (2) électronique de divertissement doit comprendre à l'origine, des moyens (210) de visualisation, tel qu'un moniteur vidéo, des moyens (211) d'interaction avec un utilisateur, et des moyens propres de paiement (220). Les moyens (211) d'interaction comprennent par exemple, soit un écran tactile, soit un pointeur tel qu'une souris, soit encore des boutons poussoirs ou un clavier.

Le principe de l'invention est de pouvoir utiliser ces machines (2) électroniques de divertissement comme moyens de sélection et moyens de paiement additionnels pour un juke-box (1), situé à proximité, dans le même bar que les machines (2) électroniques de divertissement. Ainsi, chaque machine électronique de divertissement comporte des moyens de sélection entre deux modes de fonctionnement. Le premier mode de fonctionnement correspond au mode de fonctionnement original de la machine électronique de divertissement, c'est-à-dire qu'elle fonctionne comme un jeu électronique ou comme une station de consultation d'Internet. Dans ce mode et selon une première variante de réalisation, aucune communication n'intervient entre le juke-box (1) et la machine (2) électronique de divertissement. Dans le deuxième mode de fonctionnement, la machine (2) électronique de divertissement est transformée en moyen de sélection et moyen de paiement additionnel pour le juke-box. Dans ce mode, toutes les fonctionnalités originales sont inutilisées pour laisser la place aux fonctions de sélection et de paiement du juke-box (2).

Selon l'invention, chaque machine (2) électronique de divertissement est équipée de moyens (21) de connexion à un réseau (3) local de communication. La caractéristique principale du réseau (3) local de communication est qu'il doit être bidirectionnel. Ainsi, le réseau (3) local peut être, par exemple, du type à radiofréquence ou filaire ou bien utiliser les courants électriques porteurs. De préférence, afin de limiter le coût d'installation, les moyens (21) de connexion seront choisis pour s'adapter à un réseau local existant. De même, le juke-box (1) comprend également des moyens (11) de connexion du même type au réseau (3) local de communication.

Ainsi, par l'intermédiaire d'un protocole de communication adapté, le juke-box (1) peut envoyer et recevoir des messages vers et en provenance de chaque machine (2) électronique de divertissement au travers du réseau (3) local de communication. La gestion du dialogue avec chaque machine (2) électronique de divertissement est assurée par un module (10) particulier, dit de dialogue, du système d'exploitation du juke-box.

Le type de connexion entre la machine (2) de divertissement et le juke-box dépend de la quantité d'informations que l'on souhaite transmettre vers la machine (2) de divertissement. Plus la quantité d'informations est importante, plus le débit de la connexion doit être important pour ne pas pénaliser le fonctionnement de la machine (2) de divertissement.

De même, en règle générale, le type de connexion entre juke-box (1) et serveur (5) est différent du type de connexion entre la machine (2) de divertissement et le juke-box (1). En effet, la communication entre le juke-box et le serveur est plutôt du type longue distance alors que la connexion entre les machines (2) de divertissement et le juke-box (1) est plutôt du type réseau local.

Selon l'invention, les moyens (211) d'interaction de chaque machine (2) électronique de divertissement comprennent un moyen d'activation pour pourvoir basculer le fonctionnement de la machine (2) électronique de divertissement d'un mode usuel vers celui de terminal de juke-box ou inversement. Ce moyen d'activation peut, par exemple, être constitué d'un bouton virtuel affiché sur le moniteur de la machine (2) de divertissement et sur lequel est amené un élément pointeur (flèche de souris, ou doigt de l'utilisateur, ou crayon optique) pour activer la fonctionnalité associée au bouton. De même, chaque machine (2) électronique de divertissement comprend des moyens (20, 21, 22) de gestion des moyens (210) de visualisation, des moyens (211) d'interaction et des moyens (220) de paiement pour assurer le fonctionnement de la machine (2) électronique de divertissement selon le deuxième mode. En effet, le deuxième mode de fonctionnement nécessite la visualisation d'écrans particuliers de sélection ainsi qu'une gestion différente des moyens de paiement par rapport au premier mode de fonctionnement de la machine (2) électronique de divertissement.

Ces moyens spécifiques sont, par exemple, des modules logiciels (20, 21, 22) chargés, par exemple, lors de l'installation de la modification de la machine et faisant partie ou étant rajoutés au système d'exploitation de chaque machine (2) électronique de divertissement. Les moyens spécifiques comprennent également une interface (23) de communication avec les moyens de connexion comprenant des moyens de notification de façon que chaque module logiciel puisse transmettre des notifications ou recevoir des message de la part du juke-box (1).

Un premier module (20), dit superviseur, comprend, par exemple, une première routine, respectivement une deuxième routine, qui gère l'initialisation, respectivement la terminaison, du fonctionnement de la machine (2) électronique de divertissement dans le deuxième mode de fonctionnement c'est-à-dire dans le mode permettant la sélection et le paiement de morceaux de musique du juke-box (1).

Ainsi, lorsque la machine (2) de divertissement fonctionne selon le premier mode, la sélection par un utilisateur des moyens d'activation, déclenche la première routine du module superviseur (20) qui alors est activé pour initialiser un deuxième module (21), appelé module de gestion graphique. Le module de gestion (21) graphique est destiné à gérer les moyens de sélection et les moyens (210) de visualisation de la machine (2) électronique de divertissement. Le module superviseur (20), par l'intermédiaire de la première routine initialise un troisième module (22) destiné à gérer les moyens (220) de paiement et de visualisation de la machine (2) électronique de divertissement selon le deuxième mode.

Le module superviseur (20) comprend des moyens de déclencher également l'envoi d'un message, par l'intermédiaire des moyens de notification, au travers du réseau local (3) vers le juke-box (2) pour notifier au module (10) de dialogue du juke-box (1) que la machine (2) électronique de divertissement est passée dans le deuxième mode. Dès réception de cette notification, le juke-box, par l'intermédiaire du module (10) de dialogue, devient le maître du dialogue avec la machine (2) électronique de divertissement et toutes les fonctions de divertissement de cette machine sont ignorées. En réponse à cette notification, le module (10) de dialogue comprend des moyens d'envoyer vers le module (21) de gestion graphique des messages permettant l'affichage des écrans graphiques de dialogue avec l'utilisateur. Ces écrans sont destinés à guider l'utilisateur dans son choix de chanson et dans l'utilisation de la machine (2) de divertissement comme moyens de sélection et moyens de paiement additionnels du juke-box.

De même, les interactions de l'utilisateur avec les moyens de sélection de la machine (2) de divertissement sont traduites par le module de gestion (21) graphique en messages qui sont ensuite transmis par l'intermédiaire des moyens de notification au module (10) de dialogue du juke-box (1) pour déclencher l'action correspondante, c'est-à-dire pour envoyer les informations permettant l'affichage d'un écran vers la machine (2) ou pour valider un choix de l'utilisateur.

Selon l'invention, l'écran d'accueil envoyé puis affiché par le module (21) de gestion graphique sur les moyens (210) de visualisation de la machine (2) électronique de divertissement invite l'utilisateur à sélectionner une chanson parmi l'ensemble de chansons disponible sur le juke-box. Cet écran d'accueil comprend également une première zone d'affichage contenant le montant d'argent disponible pour acheter un ou plusieurs crédits. Un crédit représente la possibilité de valider une sélection musicale pour provoquer sa restitution. Ainsi, le montant disponible correspond à une somme d'argent qui n'a pas été utilisée par l'utilisateur pour payer des crédits afin d'acheter des exécutions de chansons ou bien pour payer des crédits pour pouvoir jouer au jeu de la machine de divertissement. Une deuxième zone d'affichage contient le nombre de crédits restant à utiliser pour le mode de fonctionnement comme terminal de juke-box. Le montant disponible est par exemple, mémorisé et géré par le module (22) de gestion des moyens de paiement de la machine (2) de divertissement.

Dans une variante de réalisation où la machine (2) de divertissement permet à l'utilisateur d'accumuler des points utilisables dans la machine (2) de divertissement pour obtenir de nouveaux crédits de jeux, le module (22) de gestion des moyens de paiement peut comprendre un sous-module mettant en oeuvre une règle de conversion des points accumulés en montant d'argent disponible. Par conséquent, lors de l'affichage de l'écran d'accueil, des moyens de calcul du module (22) de gestion des moyens de paiement réalisent premièrement la conversion des points accumulés en montant d'argent disponible dit "virtuel". Deuxièmement, les moyens de calcul du module (22) de gestion des moyens de paiement additionnent ce montant d'argent disponible "virtuel" avec le montant d'argent disponible dit "réel" correspondant à une somme d'argent réelle payée par l'intermédiaire des moyens de paiement de la machine (2) de divertissement. Le résultat de cette addition correspondant au montant d'argent disponible affiché est transmis au module (10) de dialogue du juke-box qui envoie alors les informations permettant l'affichage sur la machine (2) de divertissement de l'écran d'accueil comportant l'affichage du montant d'argent disponible calculé.

L'écran d'accueil peut également comprendre un bouton virtuel déclenchant, lorsqu'il est sélectionné, une procédure de paiement gérée par le module (22) de gestion des paiements et le module (21) de gestion graphique. Cette procédure de paiement comprend tout d'abord l'envoi, par le module (10) de dialogue puis l'affichage, d'un écran de paiement par le module (21) de gestion graphique sur les moyens (210) de visualisation de la machine (2) électronique de divertissement. Cet écran de paiement comprend une zone de texte décrivant au moins une règle de paiement. Par règle de paiement, il faut comprendre une règle qui définit le montant d'argent nécessaire pour acheter un nombre entier déterminé de crédits de sélections musicales. Le module (22) de gestion des moyens de paiement vérifie la valeur du montant disponible (contenant éventuellement un montant réel et un montant virtuel tel que défini précédemment) et envoie une notification au module de dialogue (10) du juke-box contenant le montant d'argent total disponible pour la machine (2) de divertissement identifiée. Sur réception de cette notification, le juke-box détermine quelles sont les règles de paiement autorisées parmi la liste des règles de paiement disponibles puis envoie alors les informations permettant l'affichage sur la machine (2) de divertissement de l'écran de paiement indiquant, par un affichage spécifique, quelles sont les règles de paiement autorisées par rapport au montant disponible. Si aucune règle de paiement autorisée et affichée sur l'écran ne satisfait l'utilisateur, c'est-à-dire si le montant disponible est insuffisant pour acheter le nombre souhaité de crédits de sélections musicales, l'utilisateur peut alors introduire une somme d'argent ou un moyen de paiement dans la machine (2) de divertissement pour augmenter le montant disponible.

Pour chaque somme d'argent détectée par les moyens (220) de paiement de la machine (2) de divertissement, le troisième module (22) de gestion des moyens de paiement notifie au module (10) de dialogue, par l'intermédiaire des moyens de notification, le montant introduit dans la machine (2) électronique de divertissement et modifie la valeur du montant disponible. Sur réception de l'information correspondant au montant encaissé par la machine (2) électronique de divertissement, le juke-box (2) détermine la nouvelle valeur du montant disponible et envoie un message interprété par le module (21) graphique pour afficher un nouvel écran de paiement dans lequel de nouvelles règles de paiement autorisées peuvent être affichées, si le montant d'argent introduit le permet.

L'écran de paiement peut comprendre un bouton virtuel de validation dont la sélection provoque, soit la validation de la règle de paiement sélectionnée par l'utilisateur parmi les règles de paiement autorisées et le retour à l'écran d'accueil, soit simplement le retour à l'écran d'accueil si aucune règle de paiement n'a été sélectionnée par l'utilisateur. Lorsqu'une règle de paiement est validée, les moyens de calcul du module (22) de gestion des moyens de paiement calcule la nouvelle valeur du montant disponible en déduisant du montant disponible total, la somme d'argent correspondant à la règle de paiement sélectionnée par l'utilisateur pour acquérir un certain nombre de crédits. Lorsque le montant disponible total comprend une partie virtuelle et une partie réelle, les moyens de calcul utilisent des règles prédéterminées définissant les proportions dans lesquelles les parties virtuelles et réelles doivent être utilisées pour déduire la somme d'argent du montant disponible. Ainsi, il peut être défini au préalable par des paramètres que la partie virtuelle est consommée en priorité ou que les parties virtuelles et réelles du montant disponible total sont utilisées de façon identique.

Le nouveau montant disponible, ainsi que la règle de paiement choisie, sont notifiés au module (10) de dialogue. Sur réception de cette notification, le module (10) de dialogue envoie un message interprété par le module (21) graphique pour afficher l'écran d'accueil avec éventuellement le nouveau montant disponible et le nouveau nombre de crédits de sélections musicales. Le nombre de crédit disponible est mémorisé et mis à jour, soit sur la machine (2) de divertissement, soit sur le juke-box. Dans ce dernier cas, la valeur du nombre de crédits est associée à l'identification de la machine (2) de divertissement correspondante. Dans le cas où la valeur du nombre de crédits est mémorisée sur la machine (2) de divertissement, la mise à jour de la valeur du nombre de crédit disponible est réalisée par l'envoi d'un message du module (10) de dialogue à destination du module (22) de gestion de paiement de la machine (2) de divertissement indiquant la nouvelle valeur du nombre de crédits. Sur réception de ce message, le module (22) de gestion de paiement effectue la mise à jour localement sur la machine (2) de divertissement.

Dans le cas où la valeur du nombre de crédits est mémorisée sur le juke-box, la valeur du nombre de crédits est augmentée localement sur le juke-box, sur réception de la notification indiquant la règle de paiement sélectionnée après validation par l'utilisateur.

Dans une variante de réalisation, la modification du montant disponible peut intervenir à tout moment par l'introduction d'une somme d'argent ou de moyens de paiement dans la machine de divertissement. Dans cette variante, pour chaque somme d'argent détectée par les moyens (220) de paiement de la machine (2) de divertissement, le troisième module (22) de gestion des moyens de paiement notifie au module (10) de dialogue, par l'intermédiaire des moyens de notification, le montant introduit dans la machine (2) électronique de divertissement et modifie la valeur du montant disponible. Sur réception de l'information correspondant au montant encaissé par la machine (2) électronique de divertissement, le juke-box (2) détermine la nouvelle valeur du montant disponible et envoie un message interprété par le module (21) graphique pour modifier l'écran en cours, de sorte que le montant disponible affiché corresponde au montant calculé.

Dans une variante de réalisation, il est possible que le montant du paiement minimum de la machine (2) de divertissement soit supérieur au montant de paiement minimum des règles de paiement du juke-box. A titre d'exemple, le montant minimum pour le paiement d'une seule sélection est 1fr alors que le montant minimum pour le paiement d'une partie sur la machine de divertissement est 5fr. Ainsi, le cas peut se présenter qu'après sélection d'une règle de paiement, le montant disponible restant est, de 3fr et après utilisation des crédits de sélection musicale l'utilisateur bascule dans le premier mode de fonctionnement correspondant au mode de fonctionnement original de la machine (2) de divertissement. Dans ce cas, le module (22) de gestion des moyens de paiement transfère un montant disponible qui n'est, a priori, pas prévu pour permettre une utilisation de la machine (2) de divertissement en mode divertissement. Pour pallier ce cas de figure, les moyens, par exemple le logiciel permettant le fonctionnement selon le premier mode, sont modifiés pour qu'ils prennent en compte tous les montants. Une autre solution consiste à afficher sur l'écran de paiement, uniquement les règles de paiement dont le montant correspond à un multiple du montant minimum accepté par la machine (2) de divertissement dans le mode divertissement. Enfin, une autre solution consiste à afficher sur l'écran de paiement uniquement les règles de paiement dont la sélection aboutit, soit à la réduction à zéro du montant disponible, soit à la réduction du montant disponible à une valeur au moins égale au montant minimum de paiement de la machine (2) de divertissement.

La sélection d'une oeuvre musicale par l'utilisateur est réalisée par des interactions avec l'écran d'accueil. Comme expliqué précédemment, les interactions de l'utilisateur avec les moyens de sélection de la machine (2) de divertissement sont traduites par le module de gestion (21) graphique en messages qui sont ensuite transmis par l'intermédiaire des moyens de notification (23) au module (10) de dialogue du juke-box (1) pour déclencher l'action correspondante, c'est-à-dire pour envoyer les informations permettant l'affichage d'un nouvel écran sur la machine ou la modification d'un écran.

Lorsque l'utilisateur valide ou confirme un choix de sélection musicale par l'intermédiaire d'une action déterminée sur les moyens (210) d'interaction de la machine (2) électronique de divertissement, par exemple sur un bouton virtuel de validation, le module (21) de gestion graphique envoie une notification au module (10) de dialogue contenant une information de validation et une identification de la sélection. Sur réception de cette notification, le module (10) de dialogue vérifie alors le nombre de crédits disponible. Si le nombre de crédits est différent de zéro, le module (10) de dialogue provoque l'activation d'un module logiciel du juke-box (2) permettant d'insérer l'oeuvre sélectionnée choisie dans une queue, en vue de sa reproduction sur les moyens de restitution sonore et visuelle du juke-box (1) puis déduit une valeur correspondant à la sélection commandée du solde de crédit disponible. Enfin, le module (10) de dialogue envoie un message qui est interprété par le module (21) graphique pour permettre l'affichage de l'écran d'accueil avec éventuellement le montant disponible et le nouveau nombre de crédits de sélections musicales.

Si le nombre de crédit est égal à zéro, le module (10) de dialogue envoie un message interprété par le module (21) graphique pour afficher l'écran de paiement décrit précédemment de sorte que la validation de la sélection n'est confirmée que si l'utilisateur sélectionne et valide une règle de paiement tel que décrit précédemment.

A tout moment, l'utilisateur peut à partir de l'écran d'accueil, actionner les moyens d'activation pour basculer le mode de fonctionnement de la machine (2) de divertissement dans le premier mode de fonctionnement correspondant au mode original de la machine (2).

Si l'utilisateur sélectionne le premier mode de fonctionnement en actionnant les moyens d'activation, le module (21) de gestion déclenche les moyens de notification pour envoyer une notification de fin de connexion au module (10) de dialogue. Sur réception de cette notification, le module (10) de dialogue du juke-box émet un message de terminaison au module superviseur (20) de la machine et coupe la connexion. Sur réception de ce message, le superviseur (20) active la deuxième routine provoquant l'arrêt des tâches exécutées par le module (21) de gestion graphique et par le module (22) de paiement pour activer de nouveau les fonctions et les tâches originales de la machine (2) de divertissement. Au cours de cette procédure d'arrêt, le module (22) de gestion des moyens de paiement transfère, s'il est différent de zéro, le montant disponible total vers un module spécifique de gestion des paiements du premier mode de fonctionnement. Si le montant disponible total comprend un montant virtuel résiduel et un montant réel, les moyens de calcul du module (22) de gestion des moyens de paiement effectuent la conversion inverse du montant virtuel résiduel en points et transfère le résultat de cette conversion vers un module logiciel spécifique assurant le fonctionnement de la machine (2) de divertissement selon le premier mode. De même, la valeur du nombre de crédits de sélections musicales utilisables est mémorisé, soit sur des moyens de mémorisation de la machine (2) de divertissement par le module (22) de gestion des moyens de paiement, soit sur des moyens de mémorisation du juke-box. Dans ce dernier cas, le module (22) de gestion des moyens de paiement notifie, par l'intermédiaire des moyens de notification, le module (10) de dialogue du juke-box en indiquant dans un message la valeur du nombre de crédits restant ainsi q'une identification de la machine (2) de divertissement émettrice de la notification. Sur réception de cette notification, le module (10) de dialogue mémorise le nombre de crédits envoyé et lui associe l'identifiant de la machine (2) de divertissement émettrice.

Enfin, les sélections choisies par l'utilisateur et insérées dans la queue en vue de leur reproduction seront reproduites comme si elles avaient été choisies en utilisant l'interface utilisateur du juke-box.

Dans une variante de réalisation, chaque machine (2) électronique de divertissement comprend des moyens d'identification vis-à-vis du module (10) de dialogue, de sorte que, lorsque le juke-box est connecté à plusieurs machines (2) de divertissement, il puisse gérer de façon asynchrone la communication avec les différentes machines (2) de divertissement. Si une seule machine de divertissement est connectée au juke-box, l'identification de la machine (2) de divertissement permet au système d'exploitation du juke-box de pouvoir gérer simultanément les opérations de sélection sur la machine (2) de divertissement et celles effectuées sur ses propres moyens d'interaction.

Le contenu des écrans affichés sur les moyens (210) de visualisation de chaque machine (2) de divertissement dépend, de la capacité de traitement des moyens (210) de visualisation de la machine (2) de divertissement mais également du taux maximum de transferts de données autorisé sur le réseau local. Plus le taux de transfert est important, plus la qualité et la quantité d'affichages seront importantes.

Dans une autre variante de réalisation, chaque machine (2) électronique de divertissement peut comprendre un module (non représenté) de relevé statistique. Ce module de relevé statistique comprend des moyens de collecte permettant de collecter des informations sur l'utilisation de la machine (2) de divertissement lorsqu'elle fonctionne selon le premier mode, c'est-à-dire selon son mode de fonctionnement original. Les informations concernant l'utilisation de la machine (2) de divertissement sont mémorisées sur des moyens de mémorisation de la machine (2), par exemple dans un fichier de compte rendu (en anglais: log file). Le module de relevé statistique comprend une liaison avec les moyens de notification, de sorte que le fichier ou les informations statistiques contenues dans ce fichier de compte rendu soient transmises au module (10) de dialogue du juke-box. La transmission de ces informations est déclenchée par le module de relevé statistique, soit lors de chaque connexion de la machine (2) de divertissement sur le réseau local (3), soit à intervalles réguliers, soit lorsque la quantité d'informations à transmettre atteint un seuil déterminé. Lorsque le module (10) de dialogue du juke-box reçoit ces informations, il les mémorise à son tour sur ses moyens de mémorisation dans un fichier de compte rendu. Lorsque le juke-box (1) se connecte à un serveur (5) distant, pour mettre à jour des informations constituant des sélections ou envoyer des données d'utilisation du juke-box, les informations concernant la ou les machines de divertissement, contenues dans le fichier de compte rendu du juke-box peuvent être transmises sur demande vers le serveur pour être exploitées, par exemple à des fins commerciales.

Les informations sur l'utilisation de la machine (2) de divertissement sont, par exemple, la quantité de somme d'argent introduite dans la machine (2) de divertissement lorsqu'elle fonctionne selon le premier mode ou, si la machine (2) de divertissement comporte plusieurs jeux, quel est le jeu choisi le plus souvent ou encore d'autres informations statistiques etc...

De même, la machine (2) de divertissement peut contenir un module de gestion des mises à jour permettant à un serveur (5) distant d'être utilisé pour mettre à jour le système d'exploitation de la machine (2) de divertissement. Pour ce faire, les informations de mise à jour sont, dans un premier temps, téléchargées sur le juke-box en communiquant l'identifiant de la machine (2) de divertissement à laquelle la mise à jour est destinée. Ensuite, le module (10) de dialogue du juke-box peut initier une connexion avec la machine (2) de divertissement destinatrice de la mise à jour pour lui transmettre les informations nécessaires. Dans une autre variante de réalisation, l'envoi des informations de mise à jour est réalisée dès que la machine (2) de divertissement notifie au module (10) de dialogue qu'elle est connectée.

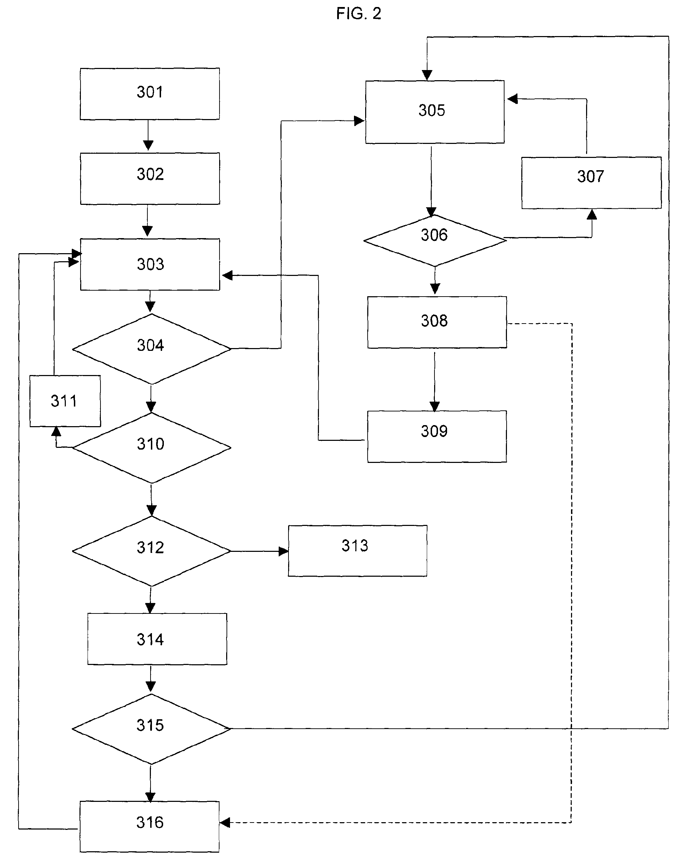

Le procédé de communication selon l'invention va à présent être décrit en référence à la figure 2.

La première étape (301) du procédé selon l'invention consiste en l'actionnement des moyens d'activation pour basculer le fonctionnement de la machine de divertissement dans le deuxième mode. Cet actionnement déclenche, dans une deuxième étape (302), une initialisation de la connexion entre une machine (2) de divertissement et le juke-box (1). Cette initialisation consiste en l'activation du module (10) de dialogue du juke-box et des modules (21) de gestion graphique et de paiement (22) de la machine de divertissement. Ensuite, dans une troisième étape (303), un affichage effectué sur les moyens de visualisation invite à choisir une sélection musicale. L'étape d'affichage comprend également une étape de collecte et/ou de calcul du montant disponible et éventuellement du nombre de crédits restant.

A ce stade, plusieurs actions sont possibles de la part de l'utilisateur. Par conséquent, la machine est en attente d'une interaction de l'utilisateur.

Ainsi, dans un premier cas, la machine attend, dans une quatrième étape (304), que l'utilisateur valide une procédure de paiement en agissant sur des moyens d'interaction de la machine (2) de divertissement. Si tel est le cas, un écran de paiement est affiché dans une cinquième étape (305). Comme expliqué précédemment, cet écran de paiement comprend la liste des règles de paiement disponibles. Ensuite la machine attend, dans une sixième étape (306), que l'utilisateur introduise un moyen de paiement (pièce, billet, carte de crédit etc...). L'introduction d'un moyen de paiement provoque l'envoi, dans une septième étape (307), d'une notification vers le juke-box contenant une information représentative du montant détecté. Le juke-box répond à cette notification en envoyant vers la machine de divertissement un message permettant de modifier l'écran de paiement pour afficher, selon la cinquième étape, le nouveau montant disponible et éventuellement les nouvelles règles de paiement disponibles. Tant que l'utilisateur introduit un moyen de paiement, la septième étape et le retour à l'affichage (305) de l'écran de paiement sont effectués. Dans une huitième étape (308), la machine (2) attend que l'utilisateur sélectionne une règle de paiement et/ou un moyen de validation tel qu'un bouton virtuel de l'écran de paiement pour revenir à l'écran d'accueil. Si une règle de paiement est sélectionnée avant la sélection du moyen de validation, dans une neuvième étape (309), le module (21) de gestion graphique envoie au module (10) de dialogue une notification représentative de la règle de paiement sélectionnée par l'utilisateur. Dans cette neuvième étape (309) et sur réception de cette notification, le module (10) de dialogue augmente le nombre de crédits et diminue le montant disponible, puis envoie un message au module graphique pour afficher, selon la troisième étape (303), l'écran d'accueil avec les nouvelles valeurs de crédit et de montant disponible. Si aucune règle de paiement n'est sélectionnée avant la sélection du moyen de validation, le module (21) de gestion graphique le notifie au module (10) de dialogue, en indiquant qu'aucune règle de paiement n'est sélectionnée. Sur réception de cette notification, le module effectue à nouveau la troisième étape (303) d'affichage de l'écran d'accueil.

Si le déclenchement de la procédure de paiement, tel que défini précédemment, n'est pas réalisé pendant l'affichage de l'écran d'accueil, la machine attend, dans une dixième étape (310), l'introduction d'un moyen de paiement. Si une somme d'argent est introduite dans la machine (2), dans une onzième étape (311), une notification générée par le module (22) de gestion des moyens de paiement, et contenant une information représentative du montant détecté est envoyée vers le module (10) de dialogue du juke-box. Le module (10) de dialogue du juke-box répond, dans la onzième étape (311), à cette notification en envoyant vers la machine de divertissement un message permettant de modifier l'écran d'accueil pour afficher, selon la troisième étape (303), le nouveau montant disponible.

Si aucune somme d'argent n'est détectée pendant l'affichage de l'écran d'accueil de la troisième étape (303), la machine attend, dans une dixième étape (312), l'actionnement des moyens d'activation pour basculer le fonctionnement de la machine de divertissement du deuxième mode (mode interface de juke-box) vers le premier mode (mode original de la machine de divertissement). Si cet actionnement est détecté, une treizième étape (313) est déclenchée dans laquelle les tâches spécifiques au choix et au paiement des sélections sur la machine de divertissement sont clôturées par le module de dialogue et la connexion entre le juke-box et la machine (2) de divertissement est interrompue. La treizième étape comprend également le transfert, par le module (22) de gestion des moyens de paiement vers des moyens spécifiques de la machine de divertissement, du montant disponible restant et non utilisé au moment du basculement dans le premier mode.

Lors de l'affichage de la troisième étape (303), l'utilisateur peut dans une quatorzième étape (314), utiliser les moyens d'interaction pour choisir une sélection musicale. Lorsque le choix de la sélection est validé par l'utilisateur, le module (21) de gestion graphique notifie au module (10) de dialogue une information représentative de l'identification de la sélection choisie. Sur réception de cette notification, dans une quinzième étape (315), le module (10) de dialogue vérifie si le solde de crédit est également à zéro.

Si le solde de crédit est nul, le procédé selon l'invention déclenche la procédure de paiement par la cinquième étape (305). La procédure est identique, hormis le fait qu'après la huitième étape (308) de la procédure de paiement, le module (10) de dialogue est notifié par le module (22) de gestion des moyens de paiement pour insérer, dans une seizième étape (316), la sélection choisie et validée dans une queue de sélections à reproduire et pour déduire un crédit du nombre total de crédits. Ensuite, le module de dialogue (10) envoie un message provoquant le retour à la troisième étape (303) d'affichage de l'écran d'accueil avec une mise à jour du nombre de crédits.

Si à la quinzième étape (315), le solde de crédit est différent de zéro, le module (10) de dialogue insère, dans la seizième étape (316), la sélection choisie et validée dans une queue de sélections à reproduire et déduit un crédit du nombre total de crédits. Ensuite, le module de dialogue (10) envoie un message provoquant le retour à la troisième étape (303) d'affichage de l'écran d'accueil avec une mise à jour du nombre de crédits.

Ainsi, le dispositif de communication selon l'invention se caractérise en ce que chaque machine (2) électronique de divertissement est connectée au système (2) de reproduction par l'intermédiaire d'une interface (23) réseau et d'un réseau (3) local associé et comprend des moyens (22) spécifiques de gestion des moyens de paiement, des moyens (21) spécifiques de gestion des moyens de visualisation et des moyens d'interaction, pour permettre sur la machine (2) électronique de divertissement, la sélection et le paiement d'au moins une sélection mémorisée sur le système (2) de reproduction en vue de sa reproduction sur le système de reproduction, les moyens (22) spécifiques de gestion des moyens de paiement et les moyens (21) spécifiques de gestion des moyens de visualisation et des moyens d'interaction étant déclenchés par des moyens d'activation de la machine (2) électronique de divertissement.

Dans un autre mode de réalisation, le système (2) de reproduction comprend des moyens (11) de communication avec l'interface (23) de communication de chaque machine (2) électronique de divertissement, un module (10) de gestion spécifique des messages provenant de chaque machine (2) électronique de divertissement.

Dans un autre mode de réalisation, chaque machine (2) électronique de divertissement comprend des moyens d'identification permettant une différentiation auprès du système (2) de reproduction.

Dans un autre mode de réalisation, le système (2) de reproduction comprend des moyens (13) de communication avec un serveur (5) central distant.

Dans un autre mode de réalisation, chaque machine (2) électronique de divertissement comprend des moyens de mémorisation permettant de mémoriser des informations sur l'utilisation de la machine électronique de divertissement.

Dans un autre mode de réalisation, les moyens (22) spécifiques de gestion des moyens de paiement comprennent des moyens de calcul du montant disponible pour payer des chansons à partir, premièrement d'une somme d'argent introduite par l'utilisateur dans la machine (2) électronique de divertissement, deuxièmement d'un montant d'argent résiduel introduit dans la machine (2) de jeu avant le déclenchement des moyens (20, 21, 22) spécifique de gestion, troisièmement d'une nombre de points de jeu accumulés avant le déclenchement des moyens (20, 21, 22) spécifiques de gestion.

De même, le procédé de communication se caractérise en ce qu'il comprend:
une étape (301) d'activation de moyens de gestion spécifiques d'une machine (2) électronique de divertissement pour modifier le mode de fonctionnement original de la machine (2) électronique de divertissement en un mode mettant en oeuvre les étape suivantes :
   une étape (302) de connexion entre le système de reproduction et la machine électronique de divertissement ;
   une étape (303, 304) de transfert d'écrans graphiques de dialogue, du système de reproduction vers la (2) machine électronique de divertissement, invitant un utilisateur à choisir une sélection musicale ou à déclencher une étape de paiement;
   une étape (308) de choix d'une sélection musicale;
   une étape (315) de paiement de la sélection choisie
   une étape de reproduction, par le système (1) de reproduction, de la sélection choisie.

Dans un autre mode de réalisation, l'étape de paiement comprend :
une étape de calcul du montant disponible à partir du montant restant non utilisé par la machine de divertissement et de la somme d'argent introduite dans les moyens de paiement de la machine de divertissement par l'utilisateur,
une étape de sélection et de validation par l'utilisateur d'une règle de paiement pour déterminer le nombre de sélections à choisir.

Dans un autre mode de réalisation, l'étape de calcul comprend une étape de conversion d'un nombre de points de jeu accumulés pendant l'utilisation de la machine de divertissement selon de fonctionnement original, en montant disponible.

Dans un autre mode de réalisation, le procédé comprend une étape de mise à jour d'au moins une machine (2) électronique de divertissement comprenant :
une étape de transfert à partir d'un serveur (5) distant des informations de mise à jour concernant au moins une machine (2) électronique de divertissement déterminée, sur le système de reproduction connecté au serveur par l'intermédiaire d'un réseau grande distance ;
une étape de connexion entre le système de reproduction et chaque machine (2) électronique de divertissement déterminée,
une étape d'envoi des informations de mise à jour sur chaque machine (2) électronique de divertissement déterminée.

Dans un autre mode de réalisation, le procédé comprend :
une étape de mémorisation sur chaque machine (2) électronique de divertissement d'informations concernant leur utilisation ;
une étape de transfert des informations sur l'utilisation des machines (2) électroniques de divertissement vers le système de reproduction puis du système de reproduction vers un serveur (5) distant auquel est connecté le système de reproduction par l'intermédiaire d'un réseau grande distance.

Dans un autre mode de réalisation, l'étape de choix d'une sélection est suivie d'une étape de diminution de crédit et les deux étapes sont réitérées jusqu'à épuisement du crédit.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes. Notamment, la descritpion faite en référence à la sélection d'une chanson peut s'appliquer également à la sélection d'une oeuvre autre que musicale, par exemple, film, texte de roman ou toute autre oeuvre audiovisuelle.

## Revendications

1. Dispositif de communication entre un système (1) de reproduction d'informations audiovisuelles et au moins une machine (2) électronique de divertissement, chaque machine électronique de divertissement comprenant des moyens de visualisation (210), des moyens d'interaction (211) avec l'utilisateur et des moyens (220) de paiement, **caractérisé en ce que** chaque machine (2) électronique de divertissement est connectée au système (1) de reproduction par l'intermédiaire d'une interface (23) réseau et d'un réseau (3) local associé et comprend des moyens (22) spécifiques de gestion des moyens de paiement, des moyens (21) spécifiques de gestion des moyens de visualisation et des moyens d'interaction, pour permettre sur la machine (2) électronique de divertissement, la sélection et le paiement d'au moins une sélection mémorisée sur le système (1) de reproduction, en vue de sa reproduction sur le système de reproduction, les moyens (22) spécifiques de gestion des moyens de paiement, et les moyens (21) spécifiques de gestion des moyens de visualisation et des moyens d'interaction étant déclenchés par des moyens d'activation de la machine (2) électronique de divertissement.

2. Dispositif de communication selon la revendication 1, **caractérisé en ce que** le système (2) de reproduction comprend des moyens (11) de communication avec l'interface (23) de communication de chaque machine (2) électronique de divertissement, un module (10) de gestion spécifique des messages provenant de chaque machine (2) électronique de divertissement.

3. Dispositif de communication selon la revendication 1 ou 2, **caractérisé en ce que** chaque machine (2) électronique de divertissement comprend des moyens d'identification permettant une différentiation auprès du système (2) de reproduction.

4. Dispositif de communication selon l'une des revendications 1 à 3, **caractérisé en ce que** le système (1) de reproduction comprend des moyens (13) de communication avec un serveur (5) central distant.

5. Dispositif de communication selon l'une des revendications 1 à 4, **caractérisé en ce que** chaque machine (2) électronique de divertissement comprend des moyens de mémorisation permettant de mémoriser des informations sur l'utilisation de la machine électronique de divertissement.

6. Dispositif de communication selon l'une des revendications 1 à 4, **caractérisé en ce que** les moyens (22) spécifiques de gestion des moyens de paiement comprennent des moyens de calcul du montant disponible pour payer des chansons à partir, premièrement d'une somme d'argent introduite par l'utilisateur dans la machine (2) électronique de divertissement, deuxièmement d'un montant d'argent résiduel introduit dans la machine (2) de jeu avant le déclenchement des moyens (20, 21, 22) spécifiques de gestion, troisièmement d'une nombre de points de jeu accumulés avant le déclenchement des moyens (20, 21, 22) spécifiques de gestion.

7. Procédé de communication entre un système (1) de reproduction d'informations audiovisuelles et au moins une machine (2) électronique de divertissement, chaque machine (2) électronique de divertissement comprenant des moyens (210) de visualisation, des moyens (211) d'interaction avec l'utilisateur et des moyens (220) de paiement, le système (1) de reproduction étant connecté à chaque machine (2) électronique de divertissement par l'intermédiaire d'un réseau (3) local, **caractérisé en ce que** le procédé comprend:
une étape (301) d'activation des moyens de gestion spécifiques d'une machine (2) électronique de divertissement pour modifier le mode de fonctionnement original de la machine (2) électronique de divertissement en un mode mettant en oeuvre les étapes suivantes :
une étape (302) de connexion entre le système de reproduction et la machine électronique de divertissement ;
une étape (303, 304) de transfert d'écrans graphiques de dialogue, du système de reproduction vers la (2) machine électronique de divertissement, invitant un utilisateur à choisir une sélection musicale ou à déclencher une étape de paiement;
une étape (308) de choix d'une sélection musicale;
une étape (315) de paiement de la sélection choisie
une étape de reproduction, par le système (1) de reproduction, de la sélection choisie.

8. Procédé de communication selon la revendication 7, **caractérisé en ce que** l'étape de paiement comprend :
une étape de calcul du montant disponible à partir du montant restant non utilisé par la machine de divertissement et de la somme d'argent introduite dans les moyens de paiement de la machine de divertissement par l'utilisateur,
une étape de sélection et de validation par l'utilisateur d'une règle de paiement pour déterminer le nombre de sélections à choisir.

9. Procédé de communication selon la revendication 8, **caractérisé en ce que** l'étape de calcul comprend une étape de conversion d'un nombre de points de jeu accumulé pendant l'utilisation de la machine de divertissement selon de fonctionnement original, en montant disponible.

10. Procédé de communication selon l'une des revendications 7 à 9, **caractérisé en ce qu'**il comprend une étape de mise à jour d'au moins une machine (2) électronique de divertissement comprenant :
une étape de transfert à partir d'un serveur (5) distant des informations de mise à jour concernant au moins une machine (2) électronique de divertissement déterminée, sur le système de reproduction connecté au serveur par l'intermédiaire d'un réseau grande distance
une étape de connexion entre le système de reproduction et chaque machine (2) électronique de divertissement déterminée ;
une étape d'envoi des informations de mise à jour sur chaque machine (2) électronique de divertissement déterminée.

11. Procédé de communication selon l'une des revendications 7 ou 10, **caractérisé en ce qu'**il comprend :
une étape de mémorisation sur chaque machine (2) électronique de divertissement d'informations concernant leur utilisation,
une étape de transfert des informations sur l'utilisation des machines (2) électroniques de divertissement vers le système de reproduction puis du système de reproduction vers un serveur(5) distant auquel est connecté le système de reproduction par l'intermédiaire d'un réseau grande distance.
